# EUROPÄISCHE PATENTSCHRIFT

(11) **EP 1 371 910 B1**
(45) Veröffentlichungstag und Bekanntmachung des Hinweises auf die Patenterteilung: **25.07.2007**
(21) Anmeldenummer: 03012595.9
(22) Anmeldetag: 03.06.2003
(51) Int. Cl.: F24D 11/00, F24D 10/00

(54) **Hausanschlussstation für Fernwärme**
District heating distribution station
Station de raccordement domestique pour chauffage à distance

(30) Priorität: 12.06.2002 DE 10226870
(43) Veröffentlichungstag der Anmeldung: 17.12.2003
(73) Patentinhaber: MSR-Service für HKS-Anlagen Öl- und Gasbrenner GmbH, 15537 Grünheide (DE)
(72) Erfinder: Schramm, Bruno, Dipl.-Ing., 15537 Grünheide (DE); Lang, Jürgen, Dipl.-Ing., 12557 Berlin (DE)
(74) Vertreter: Burghardt, Dieter

(56) Entgegenhaltungen:
- DE-A1- 4 332 141
- DE-A1- 4 333 270
- DE-A1- 19 508 061
- DE-A1- 19 621 247
- DE-A1- 19 706 067
- FROTSCHER H: "HEIZUNGSREGELUNG IN WOHNGEBAEUDEN MIT FERNHEIZANSCHLUSS" IKZ HAUSTECHNIK SANITAR, HEIZUNG KLIMA ELEKTRO, STOBEL VERLAG. ARNSBERG, DE, Bd. 44, Nr. 18, 1990, Seiten 41-42,44,46, XP000195091

## Beschreibung

Die Erfindung betrifft eine Hausanschlußstation, die aus Warmeübertragern, Speichern, Pumpen, Temperaturmeßfühlern, Armaturen und einer Regeleinrichtung besteht und Anschlüsse für Fernwärmevor- und -rücklauf, Heizungsvor- und -rücklauf sowie Trinkwasserzulauf und Warmwasserzu- und -rückführung hat.

Mit Hilfe derartiger Hausanschlußstationen werden Ein- und Mehrfamilienhäuser, Hotels, Bürogebäude, Produktionsstätten, therapeutische Einrichtungen, Sportstätten und andere kommunale Einrichtungen mit Wärme für Heizung und Warmwasserbereitung versorgt.

Eine Hausanschlußstation für Fernwärme muß so ausgelegt sein, daß der Energiebedarf für Heizung und Warmwasser mit den vom Verbraucher gewünschten Temperaturen zu jeder Zeit abgedeckt werden kann.

Von den Fernwärmelieferanten wird die Temperatur des Fernwärmevorlaufes an die Witterung gleitend angepaßt, um die Verbraucher auch bei kalter Witterung ausreichend mit Wärme zu versorgen und um in der warmen Jahreszeit nicht unnötig Fernwärme bereitzustellen und so die Femwärmeversorgung wirtschaftlich zu gestalten.

Die Temperatur des Fernwärmevorlaufes kann auf 140 °C in der kalten Jahreszeit ansteigen. In der wärmeren Jahreszeit erreicht sie 80°C und könnte weit darunter liegen, wenn nicht für die Warmwasserbereitung Wärme mit einer Temperatur von mindestens 65°C bereitgestellt werden müßte.

Auch der tägliche Bedarf an Fernwärme weist starke Schwankungen auf, vor allem durch den Spitzenbedarf in den Morgenstunden, wenn die Gebäude nach der nächtlichen Phase des abgesenkten Heizbetriebs wieder aufgeheizt werden und verstärkt Warmwasser für die Morgentoilette, insbesondere für das morgendliche Bad benötigt wird.

Obwohl der Wärmebedarf für die Warmwasserbereitung nur kurzzeitig auftritt, erhöht er die erforderliche Fernwärmevorlaufleistung erheblich, wenn der Bedarf für Heizung und Warmwasserbereitung gleichzeitig auftritt. Für diese höhere Fernwärmevorlaufleistung sind im Fernwärmenetz größere Rohrleitungen und Pumpen zu installieren, welche die Fernwärme verteuern.

Um die Verbraucher daran zu interessieren, ihren maximalen Fernwärmeverbrauch zu drosseln und einem Durchschnittsverbrauch anzupassen, wodurch die Anschlußleistung ihrer Hausanschlußstation reduziert werden kann und mehr Verbraucher an das Fernwärmenetz angeschlossen werden können, erheben die Fernwärmelieferanten neben den Kosten für den Fernwärmeverbrauch als fixe Kosten einen Zuschlag in Abhängigkeit von der Anschlußleistung der Hausanschlußstation, dem sogenannten Anschlußwert. Das hat dazu geführt, daß die Hausanschlußstationen mit Trinkwasserspeichern versehen werden, aus denen ein Teil oder der gesamte Warmwasserbedarf während der Spitzenbedarfszeiten abgedeckt wird. Bei Hausanschlußstationen für Fernwärme zur Heizung und Warmwasserbereitung können prinzipiell Anteile vom Fernwärmevorlauf, vom Fernwärmerücklauf, vom Heizungsrücklauf oder vom Warmwasser gespeichert werden, um in einer Spitzenbedarfszeit neben der Anschlußleistung eine Reserve zur Abdeckung eines kurzzeitigen Spitzenbedarfs zur Verfügung zu haben.

Bei Warmwasserspeichern werden Speicherwassererwärmer, Speicher-Lade-Systeme und Durchflußsysteme unterschieden. (Zeitschrift "Fernwärme international", Jahrgang 21, Heft 1/2 von 1992).

Ein Speicherwasserbehälter wurde in DE 160 40 34 A1 vorgeschlagen. Er besteht aus einem Speicher, in dem ein mit Fernwärme gespeister WärmeÜbertrager angeordnet ist.

Das Speicher-Lade-System ist in DE 250 81 35 A1 und DE 260 59 94 A1 beschrieben. Es weist einen Speicher und externe Wärmeübertrager auf, welche die Fernwärme, aber auch die Abwärme aus dem Rücklauf der Heizungsanlage zur Warmwasserbereitung nutzen. Dadurch wird der Leistungsanteil der Warmwasserbereitung am gesamten Fernwärmeverbrauch gering gehalten. Ein weiterer Vorteil besteht in der geringen Rücklauftemperatur des Fernwärmemediums, die es dem Fernwarmelieferanten erlaubt, mit diesem Medium im Kreislauf große Leistungen zu übertragen. Der Warmwasserbedarf wird vorwiegend aus dem Speicher abgedeckt, dessen Größe sich nach dem Warmwasserbedarf richtet.

Mit einem kleineren Speicher kommt das Durchflußsystem nach DD 204987 aus. Es erfordert jedoch größere Wärmeübertrager. Zwischen dem Warmwasserbehälter und der Trinkwasserzuführung ist ein Überströmventil angeordnet, das sich bei definiertem Druckabfall infolge erhöhten Warmwasserverbrauchs öffnet, wodurch das kalte Trinkwasser in den Speicher eindringt und aufgrund seiner größeren Dichte das Warmwasser nach oben zum Verbraucher drückt. Die erforderliche Warmwassermenge wird hauptsächlich aus dem Durchfluß der Wärmeübertrager, weniger aus dem Speicher zur Verfügung gestellt.

Die DE 44 04 856 A1 kombiniert die Vorteile des Speicher-Lade-Systems mit denen des Durchflußsystems. Sinkt bei großem Warmwasserverbrauch dessen Temperatur unter einen Sollwert, so öffnet eine Absperrarmatur dem kalten Trinkwasser den Zugang zum Warmwasserspeicher. Das Trinkwasser verdrängt das Warmwasser aus dem Speicher zu den Verbrauchern. Zeigt ein Temperaturmeßfühler an, daß der Speicher kein Warmwasser mehr enthält, fördert eine Pumpe das kalte Wasser aus dem Speicher zu Wärmeübertragern, wo es erwärmt und dann in den Speicher gefüllt wird.

Aus DE 31 25 583 A1 und DE 44 26 401 A1 sind Strahlpumpen für Warmwasserheizungssysteme bekannt.

Die DE 195 04 730 C1 beschreibt eine Warmwasserbereitungsanlage nach dem Durchflußprinzip mit Leistungsbegrenzung. Eine Verengung in der Trinkwasserleitung im Bereich des Abzweiges zum Warmwasserspeicher verursacht eine Injektorwirkung, durch die ein Kreislauf entsteht, der den Speicher bei jeder Zapfung mit frischem Warmwasser füllt.

Die kompakte Fernwärmeanschlußstation nach DE 195 38 601 A1 sieht einen Plattenwärmeübertrager für die drei Medien Fernwärme, Heizung und Warmwasser vor. Die Wärme für Heizung und Warmwasserbereitung kann parallel übertragen werden. Es ist aber auch eine Vorrangschaltung für die Warmwasserbereitung vorgesehen, bei der die Heizung vorübergehend abgestellt ist.

Warmwasserbereitungsanlagen, in denen Trinkwasser mittels Fernwärme erwärmt und als Warmwasser gespeichert wird, haben grundsätzlich den Nachteil, daß sich bei Temperaturen über 70°C die im Wasser gelösten Mineralien ausscheiden und als Kesselstein im Wärmeübertrager, im Speicher und in den Rohrleitungen niederschlagen. Dieser verschlechtert zunehmend den Wärmeübergang im Wärmeübertrager, behindert den Durchfluß und verkürzt die Betriebszeit der Anlage.

Schwerwiegender ist die Legionellengefahr, die bei derartigen Anlagen besteht, vor allem wenn sie längere Zeit nicht betrieben werden. Die im Wasser vorhandenen Legionellen vermehren sich bei Temperaturen zwischen 35 und 40°C besonders in ruhigem Wasser sprunghaft und können, wenn sie eingeatmet werden, zu ernsthaften Erkrankungen und besonders bei älteren Menschen sogar zum Tode führen. Das wurde in den Legionellen-Beiträgen nachgewiesen. (Gustav Fischer Verlag, Stuttgart/New York 1987, Seite 67 bis 71)

Ein sicherer Schutz vor Legionellen ist nur gegeben, wenn Warmwasser nicht gespeichert, sondern nur im Durchflußprinzip bereitet wird. Das Trinkwasser wird dabei im Wärmeübertrager auf 60 °C und kurzzeitig darüber erwärmt, einer Temperatur bei der Legionellen sicher abgetötet werden, und in einem Zirkulationskreislauf zu den Verbrauchern gefördert. Bei dieser Temperatur bildet sich noch kein Kesselstein. Daß sich im Fernwärmekreislauf kein Kesselstein niederschlägt, dafür sorgen die Fernwärmelieferanten.

Das Speichern eines primären Energieträgers ist aus DE 960 389 C1 bekannt geworden.

Aus DE 21 31 243 A1 ist auch bekannt, die Wärme des primären-Energieträgers auf Latentspeichermassen zu übertragen, um sie bei Bedarf zu nutzen. In der DE 27 30 406 C2 sind mehrere Latentwärmespeicher in Reihe vorgesehen. Sie sollen eine Vergleichmäßigung der Wärmeträgermenge über die Tagesstunden und eine möglichst weitgehende Absenkung der Rücklauftemperatur bewirken. Der Wärmeträger durchströmt nacheinander mehrere Wärmeübertrager, die mit Wärmespeichern kommunizieren, die ihrerseits die gespeicherte Wärme an Heizung und Warmwasserbereiter übergeben. Dadurch konnte bei einer Hausanschlußstation mit kontinuierlichem Wärmeträgerdurchsatz bei einem gegebenen Anschlußwert eine Verdoppelung der geförderten Wärmemenge erreicht werden. Diese Speicherung hat jedoch den Nachteil, daß die Latentspeichermassen teuer sind. Sie berücksichtigt auch nicht, mit welcher Temperatur die Fernwärme geliefert und folglich gespeichert wird. Die Abgabe der gespeicherten Energie, insbesondere ihre Temperatur, ist in keiner Weise an den Heizungsbedarf und den Energiebedarf für die Warmwasserbereitung angepaßt. Ein weiterer Nachteil besteht darin, daß zur Abdeckung eines Spitzenbedarfes ein zusätzlicher Brenner als Energielieferant vorgesehen werden muß.

Die DE 33 11 127 C3 beschreibt eine Regelung für Grund- und Spitzenlast. Dabei wird ein zur Heizung parallel angeordneter Speicher wechselseitig vom Heizwasservor- und -rücklauf durchströmt. Die Regelung erfolgt mit Hilfe von Temperaturmeßfühlern, Ventilen und Pumpen.

DE 200 21 015 U1 hat ein Bauteil zum Speichern von Fernwärme für die Warmwasserbereitung nach dem Durchflußsystem zum Gegenstand, in dem eine Pumpe durch einen Temperaturregler mit Hystrese geschaltet wird, der am Ausgang des Plattenwärmeübertragers der Warmwasserbereitungsanlage angeordnet ist.

Die bekannten Hausanschlußstationen mit Fernwärmespeicherung berücksichtigen nicht, daß die Fernwärmevorlauftemperatur auf über 100°C ansteigen kann, und daß ein Speicher bei Temperaturen über 100 °C überwachungspflichtig wird, womit die Betriebskosten erheblich ansteigen. Sie speichern die zur gegebenen Zeit bereitgestellte Energie und erreichen dabei keine maximale Energiespeicherung. Außerdem nehmen sie keine Anpassung an die vorgeschriebenen Solltemperaturen des Heizungs- und Warmwasservorlaufes vor.

Ziel der Erfindung ist eine Hausanschlußstation für Fernwärme mit niedrigem Anschlußwert und hohem Wirkungsgrad zu schaffen, die durch Speicherung des Fernwärmemediums außerhalb der Spitzen-bedarfszeiten und seiner Bereitstellung während der Spitzen-bedarfszeit den Wärmebedarf für Heizung und Warmwasser jederzeit abdecken kann, die gleichzeitig eine niedrige Rücklauftemperatur absichert und keinen Trinkwasserspeicher erfordert.

Die Aufgabe der Erfindung besteht darin, die bekannten Bauelemente einer Hausanschlußstation für Fernwärme so zu kombinieren, daß dieses Ziel selbsttätig erreicht wird, bei Speicherung des Fernwärmemediums mit der maximalen Temperatur, die zwischen zwei Spitzenbedarfszeiten bereitgestellt wird, jedoch unter 100°C, bei ständiger Anpassung an die Solltemperaturen des Heizungs- und Warmwasservorlaufes und bei Nutzung der Abwärme.

Erfindungsgemäß wird diese Aufgabe dadurch gelöst, daß zwischen den Anschlüssen für Fernwärmevorlauf und Heizungsvorlauf und den Anschlüssen für Heizungsrücklauf und Fernwärmerücklauf parallel ein oder mehrere Speicher für ein Gemisch aus Vor- und Rücklauf angeordnet sind und parallel dazu eine Warmwasserbereitungsanlage, die aus zwei in Reihe angeordneten Wärmeübertragern und einer Zirkulationspumpe in der Warmwasserrückführung mit variabler Leistung besteht.

Ein Speicher für ein Gemisch aus Fernwärmevor- und -rücklauf wird durch eine Strahlpumpe gespeist, die mit dem Fernwärmevor- und -rücklauf verbunden ist und zwischen der und dem Fernwärmerücklauf ein Stellventil angeordnet ist. Zwischen dem oberen Bereich des Speichers und der Strahlpumpe und im unteren Bereich des Speichers befindet sich jeweils ein Temperaturmeßfühler.

Ein weiterer Speicher für ein Gemisch aus Heizungsvor- und - rücklauf ist über ein Dreiwegeventil mit dem Heizungsrücklauf verbunden. Dieses Dreiwegeventil ist mit dem Heizungsvorlauf und über einen Abzweig mit dem oberen Bereich dieses Speichers verbunden, in dem ein Temperaturmeßfühler installiert ist. Zwischen dem Anschluß für den Heizungsrücklauf und dem Abzweig zum Dreiwegeventil befindet sich eine Umwälzpumpe und zwischen diesem Abzweig und der Mündung des Heizungsrücklaufes in einen Abzweig des Fernwärmevorlaufes ist ein Stellventil angeordnet. Dieser Abzweig des Fernwärmevorlaufes endet bei dem Wärmeübertrager, dem sekundärseitig frisches Trinkwasser zugeführt wird. Vorher durchströmt der Fernwärmevorlauf eine Heizwendel, die in diesem Speicher angeordnet ist und überträgt Wärme auf das gespeicherte Gemisch aus Heizungsvor- und -rücklauf, ohne hydraulisch mit dem Speicher verbunden zu sein.

Zwischen dem Speicher und der Einmündung des Heizungsvorlaufes ist in diesem Abzweig ein Stellventil angeordnet.

Die Warmwasserbereitungsanlage hat eine direkte Verbindung zum Fernwärmevorlauf. Außerdem hat ihr Wärmeübertrager, dem sekundärseitig frisches Trinkwasser zugeführt wird, eine Verbindung zum Fernwärmevorlauf mit einem Stellventil und einem Temperaturmeßfühler vor der Warmwasserbereitungsanlage. In diese Verbindung mündet der Heizungsrücklauf und eine Zuführung von einem Speicher, in dem der im unteren Bereich zugeführte Rücklauf in einen ausgekühlten und einen warmen Bestandteil geschieden wird. Während der ausgekühlte Bestandteil aus dem unteren Bereich des Speichers zum Anschluß für den Fernwärmerücklauf abfließt, wird der wärmere Bestandteil aus dem oberen Bereich dieses Speichers über ein Dreiwegeventil und eine Umwälzpumpe zu dem Wärmeübertrager zurückgeführt.

Über ein Dreiwegeventil kann ein Zulauf aus dem Speicher für ein Gemisch aus Fernwärmevor- und -rücklauf eingeleitet werden. Dieser Speicher hat im unteren Bereich eine Verbindung zum Rücklauf und zum Rücklaufspeicher.

Unmittelbar vor den Anschlüssen für Heizungsvor- und Warmwasservorlauf und vor der Einmündung des Heizungsrücklaufes in die Warmwasserbereitungsanlage sind Temperaturmeßfühler installiert, die wie die anderen Temperaturmeßfühler elektrisch leitend mit einem Regler verbunden sind, der die Pumpen und Absperrarmaturen betätigt.

Die Speicher für ein Gemisch aus Vor- und -rücklauf werden zwischen den Spitzenbedarfszeiten kontinuierlich aus dem Fernwärmevor- und -rücklauf bzw. Heizungsvor- und -rücklauf gespeist.

Der zwischen Strahlpumpe und dem Speicher für das Gemisch aus Fernwärmevor- und -rücklauf installierte Temperaturmeßfühler überwacht die Temperatur des zugeführten Gemisches. Bei Fernwärmetemperaturen unter 95°C schließt der Regler das Stellventil in der Saugleitung vom Rücklauf und es wird nur Fernwärmevorlauf in den Speicher gefördert.

Der Temperaturmeßfühler im unteren Bereich dieses Speichers signalisiert dem Regler bei Erreichen einer Solltemperatur, daß der Speicher mit einem Gemisch der gewünschten Temperatur gefüllt ist, worauf die Speisung vom Regler unterbrochen wird.

Diese Solltemperatur ist der zu erwartenden maximalen Temperatur des Fernwärmevorlaufes angepaßt. Sinkt die Temperatur im Speicher unter den Sollwert ab, erfolgt eine erneute Speisung.

So ist gesichert, daß der Speicher bis zum Erreichen der Spitzenbedarfszeit mit einem Maximum an Energie unterhalb von 95°C gefüllt wird, aber auch nicht mit einem Medium wesentlich niedrigerer Temperatur.

Der Speicher für das Gemisch aus Heizungsvor- und -rücklauf wird ebenfalls außerhalb der Spitzenbedarfszeiten gefüllt. Dabei wird die Temperatur des gespeicherten Gemisches durch Wärmeübertragung vom Fernwärmevorlauf über die Temperatur des Heizungsvorlaufes angehoben. Ein Temperaturmeßfühler im oberen Bereich des Speichers läßt bei einer Solltemperatur von 95°C ein Stellventil im Abzweig vom Fernwärmevorlauf schließen.

In der Spitzenbedarfszeit, wenn die Fernwärmeanschlußleistung erreicht ist, drosselt der Regler die Zuführung von Fernwärme zu den Speichern und zur Warmwasserbereitungsanlage. Er öffnet nun das Dreiwegeventil und schaltet die Umwälzpumpe für die Zuführung der gespeicherten Abwärme, deren Temperatur durch Beimischungen aus dem Speicher für das Gemisch aus Fernwärmevor- und -rücklauf soweit angehoben wird, daß sich zusammen mit dem Heizungsrücklauf eine Solltemperatur von 65°C ergibt, die von dem Temperaturmeßfühler vor der Warmwasserbereitungsanlage überwacht wird. Bei einer Ober- oder Unterschreitung betätigt der Regler ein Dreiwegeventil in der Zuführung zum Wärmeüberträger und drosselt oder erhöht den Zustrom eines heißen Mediums. Mit dieser Temperatur von 65°C läßt sich Warmwasser in der gewünschten Temperatur zur Verfügung stellen, auch wenn die gesamte Fernwärmeanschlußleistung in der Spitzenbedarfszeit für Heizung benötigt wird.

Mißt der vor dem Anschluß des Heizungsvorlaufes angeordnete Temperaturmeßfühler eine Unterschreitung der Temperatur von 40°C, so öffnet der Regler das Dreiwegeventil für den Zufluß des Heizungsrücklaufes zum Speicher für ein Gemisch aus Heizungsvor- und -rücklauf und drosselt das Stellventil im Heizungsrücklauf. Der kühlere Heizungsrücklauf dringt in den Speicher ein verdrängt das gespeicherte wärmere Medium zum Fernwärmevorlauf, mit dem es sich vermischt und die Temperatur des Heizungsvorlaufes anhebt.

Bei Erreichen einer Heizungsvorlauftemperatur von 90°C wird die Zufuhr über das Dreiwegeventil vom Regler wieder geschlossen und gleichzeitig das Stellventil im Heizungsrucklauf geöffnet, wodurch sich der Speicher wieder füllen kann. In der Spitzenbedarfszeit kann die Warmwasserbereitung nur mit einem der beiden Warmeübertrager erfolgen mit Abwärme und gespeicherter Wärme.

Die gesamte Fernwärmeanschlußleistung steht dann für die Gebäudeheizung zur Verfügung. Zusätzlich kann während der Spitzenbedarfszeit die Leistung der Zirkulationspumpe reduziert werden, wodurch für die Heizung ein weiterer Leistungsanteil zur Verfügung gestellt wird.

Ist die Spitzenbedarfszeit überschritten, schaltet der Regler die Umwälzpumpe in der Zuführung von den Speichern und zur Warmwasserbereitungsanlage aus, schließt das Dreiwegeventil in dieser Zuführung und schaltet die Zirkulationspumpe an. Das Warmwasser wird nun wieder mit Energie aus dem Fernwarmevorlauf und dem Heizungsrücklauf bereitet.

Verzeichnet der zwischen der Warmwasserbereitungsanlage und dem Anschluß für die Warmwasserzuführung angeordnete Temperaturmeßfühler, daß die Solltemperatur von 60 °C erreicht ist, drosselt der Regler die Zufuhr des Fernwärmevorlaufes durch Betätigen des Ventils in der Zuführung.

Die erfindungsgemäße Hausanschlußstation hat den Vorteil, daß keine Trinkwasserspeicher benötigt werden, die wegen der Legionellengefahr bedenklich sind und die hohe Investitionskosten und eine regelmäßige Reinigung erfordern.

Die Legionellengefahr ist somit ausgeschlossen.

Mit der Anschlußleistung der Hausanschlußstation muß in den Spitzenbedarfszeiten nur die Gebäudeheizung abgedeckt werden, nicht die Warmwasserbereitung. Ihr Anschlußwert kann daher gering gehalten werden.

Der Wärmebedarf für die Warmwasserbereitung wird während der Spitzenbedarfszeit mit gespeicherter Energie, insbesondere aus der Abwärme abgedeckt.

Ein Regler gleicht eine Unterschreitung des Temperatursollwertes im Heizungsvorlauf und Warmwasservorlauf durch Zufuhr gespeicherter Energie aus und verhindert die Überschreitung von Sollwerten. Letzteres gilt auch für die gespeicherten Medien, deren Temperatur unter 100 °C bleiben soll, damit die Speicher nicht überwachungspflichtig werden. So werden die Betriebskosten der Hausanschlußstation gering gehalten und durch weitgehende Nutzung der Abwärme wird eine niedrige Rücklauftemperatur erreicht.

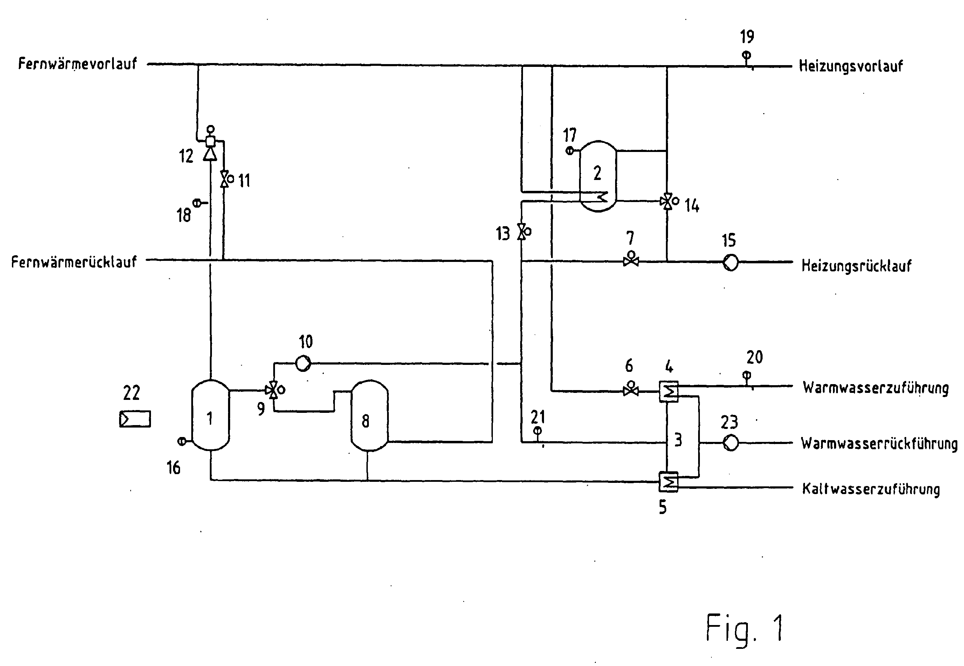

Im Folgenden wird die Erfindung an einem Ausführungsbeispiel erläutert, dem die Fig. 1 zugrunde liegt:
Zwischen den Anschlüssen für Fernwärme- und Heizungsvorlauf und Fernwärme- und Heizungsrücklauf sind parallel ein erster Speicher 1 für ein Gemisch aus Fernwärmevor- und Fernwärmerücklauf und ein weiterer, zweiter Speicher 2 für ein Gemisch aus Heizungsvor- und -rücklauf sowie eine Warmwasserbereitungsanlage 3 angeordnet.

Die Warmwasserbereitungsanlage (3) besteht aus zwei in Reihe geschalteten Wärmeübertragern, einem ersten Wärmeübertrager 4 und einem zweiten Wärmeübertrager 5, von denen beide primärseitig vom Fernwärmevorlauf oder nur der zweite Wärmeübertrager 5 vom Rücklauf durchströmt werden, wenn das Absperrventil 6 geschlossen ist. Dieser Rücklauf setzt sich aus dem Heizungsrücklauf, der durch das Ventil 7 gedrosselt werden kann, und einem Zufluß aus dem ersten Speicher 1 und dem dritten Speicher 8 zusammen, der als Rücklaufspeicher zugleich als Scheider von kaltem und warmem Rücklauf dient.

Der dritte Speicher 8 und der erste Speicher 1 sind über das Dreiwegeventil 9 und mit dem zweiten Wärmeübertrager 5 verbunden. Zwischen dem Dreiwegeventil 9 und der Einmündung in den Heizungsrücklauf befindet sich die Umwälzpumpe 10.

Der erste Speicher 1 ist über die Strahlpumpe 12 mit dem Fernwärmevor- und -rücklauf verbunden. In der Verbindung zum Rücklauf befindet sich das Absperrventil 11 und zwischen Strahlpumpe 12 und dem ersten Speicher 1 der Temperaturmeßfühler 18.

Ein weiterer Temperaturmeßfühler 16 ist im unteren Bereich des ersten Speichers 1 installiert.

Der zweite Speicher 2 hat im unteren Bereich über das Dreiwegeventil 14 einen Zulauf vom Heizungsrücklauf. Das Dreiwegeventil 14 ist auch mit dem Heizungsvorlauf verbunden. Von dieser Verbindung führt ein Abzweig zum oberen Bereich des zweiten Speichers 2, in dem ein Temperaturmeßfühler 17 installiert ist. Zwischen dem Anschluß für den Heizungsrücklauf und seinem Abzweig zum Dreiwegeventil 14 befindet sich eine Umwälzpumpe 15 und zwischen diesem Abzweig und einer weiteren Verbindung zwischen Vor- und -rücklauf ein Stellventil 7. In dieser Verbindung, die als Heizwendel durch den zweiten Speicher 2 führt, ist das Stellventil 13 angeordnet.

Ein Temperaturmeßfühler 19 befindet sich unmittelbar vor dem Anschluß des Heizungsvorlaufes. Vor dem Anschluß des Warmwasserzulaufes ist der Temperaturmeßfühler 20 und vor der Einmündung des Rücklaufes in den Wärmeübertrager 3 ist der Temperaturmeßfühler 21 installiert. Vor dem Anschluß der Warmwasserrückführung befindet sich die Zirkulationspumpe 23.

Die Strahlpumpe 12 fördert nach jeder Spitzenbedarfszeit in den ersten Speicher 1 ein Gemisch aus Fernwärmevor- und -rücklauf bis der Temperaturmeßfühler 16 dem Regler anzeigt, daß der erste Speicher 1 gefüllt ist. Der Temperaturmeßfühler 18 überwacht, daß die Temperatur des Gemisches unter 95°C bleibt. Bei einer Überschreitung läßt der Regler 22 die Strahlpumpe 12 den Anteil des Rücklaufes erhöhen.

Der zweite Speicher 2 wird außerhalb der Spitzenbedarfszeit gefüllt mit einem Gemisch aus Heizungsvor- und -rücklauf. Dabei wird vom Fernwärmevorlauf über die Heizwendel im zweiten Speicher 2 Wärme übertragen, welche die Temperatur des Speicherinhaltes über den des Heizungsvorlaufes ansteigen läßt. Der im oberen Bereich des zweiten Speichers 2 installierte Temperaturmeßfühler 19 überwacht, daß diese Temperatur nicht über 90°C ansteigt.

Bei Erreichen dieser Solltemperatur drosselt der Regler über das Stellventil 13 die Wärmezufuhr. Bei Erreichen der Fernwärmeanschlußleistung in einer Spitzenbedarfszeit schließt der Regler 22 das Ventil 6 zwischen dem Fernwärmevorlauf und der Warmwasserbereitungsanlage und öffnet stattdessen das Dreiwegeventil 9 zwischen dem ersten Speicher 1, dem dritten Speicher 8 und dem zweiten Wärmeübertrager 5 und schaltet die Umwälzpumpe 10 an. Diese fördert nun das gespeicherte Medium aus dem ersten Speicher 1, das im Dreiwegeventil 9 mit dem Medium aus dem dritten Speicher 8 gemischt wird und dabei auf 65 °C abkühlt, zur Einmündung in den Heizungsrücklauf, mit dem es zum zweiten Wärmeübertrager 5 strömt. Signalisiert der Temperaturmeßfühler 21 eine Unterschreitung von 65°C, so erhöht der Regler über das Dreiwegeventil 9 den Anteil aus dem ersten Speicher 1.

Sinkt die Temperatur des Heizungsvorlaufes unter die Solltemperatur von 40°C, so öffnet der Regler 22 auf das Signal des Temperaturmeßfühlers 19 das Dreiwegeventil 14 bei Drosselung des Stellventils 7 und läßt den Heizungsrücklauf in den zweiten Speicher 2 einströmen, der den heißeren Speicherinhalt zum Heizungsvorlauf verdrängt. Bei Erreichen der Solltemperatur des Heizungsvorlaufes werden das Stellventil 7 wieder geöffnet und das Dreiwegeventil 14 geschlossen, worauf der zweite Speicher 2 wieder gefüllt wird.

Während der Spitzenbedarfszeit wird Warmwasser nur mit der Wärme des Heizungsrücklaufes und mit der Wärme der im ersten Speicher 1 und im dritten Speicher 8 gespeicherten Medien bereitet. Der Fernwärmevorlauf steht in dieser Zeit nur für die Gebäudeheizung zur Verfügung. Für den Fall, daß der Anschlußwert dennoch nicht ausreicht, wird die Leistung der Zirkulationspumpe reduziert.

### Aufstellung der verwendeten Bezugszeichen

- 1.: Speicher für ein Gemisch aus Fernwärmevor- und -rücklauf
- 2.: Speicher für ein Gemisch aus Heizungsvor- und -rücklauf
- 3.: Warmwasserbereitungsanlage
- 4.: Wärmeübertrager, dem primärseitig Fernwärmevorlauf zugeführt wird
- 5.: Wärmeübertrager, dem sekundärseitig frisches Trinkwasser zugeführt wird
- 6.: Stellventil
- 7.: Stellventil
- 8.: Speicher und Scheider für ausgekühlten und warmen Rücklauf
- 9.: Dreiwegeventil
- 10.: Umwälzpumpe
- 11.: Stellventil
- 12.: Strahlpumpe
- 13.: Stellventil
- 14.: Dreiwegeventil
- 15.: Umwälzpumpe
- 16.: Temperaturmeßfühler
- 17.: Temperaturmeßfühler
- 18.: Temperaturmeßfühler
- 19.: Temperaturmeßfühler
- 20.: Temperaturmeßfühler
- 21.: Temperaturmeßfühler
- 22.: Regler
- 23.: Zirkulationspumpe mit variabler Leistung

## Patentansprüche

1. Hausanschlußstation für Fernwärme, bestehend aus Speichern, Wärmeübertragern, Pumpen, Absperrarmaturen, Temperaturmeßfühlern und einem Regler sowie Anschlüssen für Fernwärmevor- und -rücklauf, für Heizungsvor und - Rücklauf und für Trinkwasserzufuhr und Warmwasserzu- und -Rückführung, **dadurch *gekennzeichnet,* daß** zwischen den Vor- und Rückläufen parallel Speicher, umfassend zumindest einen ersten Speicher (1) und einen zweiten Speicher (2), für Gemische aus Vor- und Rücklauf und eine Warmwasserbereitungsanlage (3) angeordnet sind, wobei die Warmwasserbereitungsanlage aus zwei in Reihe angeordneten Wärmeübertragern, nämlich einem ersten Wärmeübertrager (4) und einem zweiten Wärmeübertrager (5), und einer Zirkulationspumpe (23) mit variabler Leistung in der Warmwasserrückführung besteht und der zweite Wärmeübertrager (5) zum Heizungsvorlauf eine Verbindungsleitung aufweist, die mit einem dritten Speicher, nämlich einem Rücklaufspeicher (8) verbunden ist.

2. Hausanschlußstation nach Anspruch 1, ***dadurch* gekennzeichnet, daß** der erste Speicher (1) durch eine Strahlpumpe (12) gespeist wird, die mit dem Fernwärmevor- und -Rücklauf verbunden ist, daß zwischen Strahlpumpe (12) und dem Fernwärmerücklauf ein Stellventil (11) angeordnet ist, daß wischen der Strahlpumpe (12) und dem ersten Speicher (1) ein Temperaturmeßfühler (18) und im unteren Bereich des ersten Speichers (1), der mit dem Rücklauf verbunden ist, ein Temperaturmeßfühler (16) installiert ist und daß der obere Bereich des ersten Speichers (1) mit einem Dreiwegeventil (9) verbunden ist.

3. Hausanschlußstation nach Anspruch 1, ***dadurch* gekennzeichnet, daß** der zweite Speicher (2) im unteren Bereich über ein Dreiwegeventil (14) einen Zulauf vom Heizungsrücklauf hat, daß das Dreiwegeventil (14) mit dem Heizungsvorlauf und über einen Abzweig mit einem oberen Bereich des zweiten Speichers (2) verbunden ist, in dem ein Temperaturmeßfühler (17) installiert ist, daß zwischen dem Anschluß für den Heizungsrücklauf und dem Abzweig zum Dreiwegeventil (14) eine Umwälzpumpe (15) angeordnet ist, daß sich zwischen diesem Abzweig und einer weiteren Verbindung zwischen Vor-und -Rücklauf ein Stellventil (7) befindet und daß der Heizungsrücklauf in einen Abzweig des Fernwärmevorlaufes zur Warmwasserbereitungsanlage (3) einmündet, wobei in diesem Fernwärmevorlauf zur Warmwasserbereitungsanlage (3) ein Stellventil (13) angeordnet ist, und daß der Fernwärmevorlauf in diesem Abzweig eine Heizwendel im zweiten Speicher (2) durchströmt.

4. Hausanschlußstation nach Anspruch 1, ***dadurch gekenn*zeichnet, daß** sich die Zuführung des Rücklaufes in den Rücklaufspeicher (8) und die Abführung des ausgekühlten Rücklaufes aus dem Rücklaufspeicher (8) im unteren Bereich des Rücklaufspeichers (8) befinden und daß der abgeschiedene wärmere Bestandteil des Rücklaufes im oberen Bereich des Rücklaufspeichers (8) über das Dreiwegeventil (9) und eine Umwälzpumpe (10) eine Verbindung zum zweiten Wärmeübertrager (5) hat.

5. Hausanschlußstation nach Anspruch 1, ***dadurch* gekennzeichnet, daß** unmittelbar vor dem Anschluß des Heizungsvorlaufes ein Temperaturmeßfühler (19), unmittelbar vor dem Anschluß des Warmwasservorlaufes ein Temperaturmeßfühler (20) und zwischen dem zweiten Wärmeübertrager (5) und der Zuführung von dem ersten Speicher (1) und dem Rücklaufspeicher (8) im Heizungsrücklauf ein Temperaturmeßfühler (21) installiert ist.

## Claims

1. A district heating distribution station for district heating, consisting of accumulators, heat exchangers, pumps, shut-off devices, temperature sensors and a controller as well as connections for district heating feed and return, for heating feed and return and for the supply of drinking water and hot water supply and return, **characterized in that** accumulators comprising at least a first accumulator (1) and a second accumulator (2) for mixtures consisting of feed and return and a hot water supply unit (3) are disposed parallel between the feeds and returns, with the hot water supply unit consisting of two heat exchangers disposed in series, namely a first heat exchanger (4) and a second heat exchanger (5) and a circulating pump (23) having variable power in the hot water return and the second heat exchanger (5) to the heating feed encompassing a connecting line, which is connected with a third accumulator, namely a return accumulator (8).

2. The district heating distribution station according to claim 1, **characterized in that** the first accumulator (1) is supplied by a jet pump (12), which is connected with the district heating feed and return, **in that** a control valve (11) is disposed between the jet pump (12) and the district heating return, **in that** a temperature sensor (18) is installed between the jet pump (12) and the first accumulator (1) and **in that** a temperature sensor (16) is installed in the lower region of the first accumulator (1), which is connected with the return and **in that** the upper region of the first accumulator (1) is connected with a three-way valve (9).

3. The district heating distribution station according to claim 1, **characterized in that** the second accumulator (2) has, in the lower region, a supply from the heating return via a three-way valve (14), **in that** the three-way valve (14) is connected with the heating feed and with an upper region of the second accumulator (2) via a branch, a temperature sensor (17) being installed in the second accumulator (2), **in that** a circulating pump (15) is disposed between the connection for the heating return and the branch to the three-way valve (14), **in that** a control valve (7) is arranged between this branch and a further connection between feed and return and **in that** the heating return discharges into a branch of the district heating feed to the hot water supply unit (3), with a control valve (13) being disposed in this district heating feed to the hot water supply unit (3) and **in that** the district heating feed in this branch flows through a heating coil in the second accumulator (2).

4. The district heating distribution station according to claim 1, **characterized in that** the supply of the return into the return accumulator (8) and the discharge of the cooled return from the return accumulator (8) are arranged in the lower region of the return accumulator (8) and **in that** the precipitated hotter component of the return in the upper region of the return accumulator (8) has a connection with the second heat exchanger (5) via the three-way valve (9) and via a circulating pump (10).

5. The district heating distribution station according to claim 1, **characterized in that** a temperature sensor (19) is installed directly upstream of the connection of the heating feed, a temperature sensor (20) is installed directly upstream of the connection of the hot water feed and a temperature sensor (21) is installed in the heating return between the second heat exchanger (5) and the supply of the first accumulator (1) and the return accumulator (8).

## Revendications

1. Station de raccordement domestique pour chauffage à distance, constituée de réservoirs, de transmetteurs de chaleur, de pompes, de robinets de fermeture, de sondes de mesure de température et d'un régulateur, ainsi que de raccords pour l'arrivée et le reflux de chaleur à distance, pour l'arrivée et le reflux de chauffage, pour l'alimentation en eau potable et pour l'arrivée et le reflux d'eau chaude, **caractérisée par** des réservoirs parallèles situés entre les arrivées et les reflux, comprenant au moins un premier réservoir (1) et un deuxième réservoir (2), pour les mélanges d'arrivée et de reflux, ainsi que par une installation de préparation d'eau chaude (3) également située entre les arrivées et les reflux, l'installation de préparation d'eau chaude étant constituée de deux transmetteurs de chaleur alignés, notamment d'un premier transmetteur de chaleur (4) et d'un deuxième transmetteur de chaleur (5), ainsi que d'une pompe de circulation (23) à performance variable située dans le reflux d'eau chaude, et le deuxième transmetteur de chaleur (5) comportant une conduite de liaison pour l'arrivée de chauffage, qui est reliée à un troisième réservoir, notamment un réservoir de reflux (8).

2. Station de raccordement domestique selon la revendication 1, **caractérisée en ce que** le premier réservoir (1) est alimenté par une pompe à jet (12) reliée à l'arrivée et au reflux de chaleur à distance, **en ce qu'**une soupape de réglage (11) est placée entre la pompe à jet (12) et le reflux de chaleur à distance, **en ce qu'**une sonde de mesure de température (18) est installée entre la pompe à jet (12) et le premier réservoir (1), une sonde de mesure de température (16) se trouvant dans la zone inférieure du premier réservoir (1), qui est reliée au reflux, et **en ce que** la zone supérieure du premier réservoir (1) est reliée à une soupape de distribution à trois voies (9).

3. Station de raccordement domestique selon la revendication 1, **caractérisée en ce que** la zone inférieure du deuxième réservoir (2) est alimentée par le reflux de chauffage par l'intermédiaire d'une soupape de distribution à trois voies (14), **en ce que** la soupape de distribution à trois voies (14) est reliée à l'arrivée de chauffage ainsi qu'à la zone supérieure du deuxième réservoir (2), dans laquelle est installée une sonde de mesure de température (17), par le biais d'un branchement, **en ce qu'**une pompe de circulation (15) est placée entre le raccord du reflux de chauffage et le branchement de la soupape de distribution à trois voies (14), **en ce qu'**une soupape de réglage (7) se trouve entre ce branchement et un autre raccordement situé entre l'arrivée et le reflux et **en ce que** le reflux de chauffage débouche sur un branchement de l'arrivée de chaleur à distance pour l'installation de préparation d'eau chaude (3), une soupape de réglage (13) étant prévue dans cette arrivée de chaleur à distance pour l'installation de préparation d'eau chaude (3), et **en ce que** dans ce branchement, l'arrivée de chaleur à distance traverse une spirale chauffante dans le deuxième réservoir (2).

4. Station de raccordement domestique selon la revendication 1, **caractérisée en ce que** l'alimentation du reflux vers le réservoir de reflux (8) et l'évacuation du reflux refroidi venant du réservoir de reflux (8) se trouvent dans la zone inférieure du réservoir de reflux (8), et **en ce que** l'élément séparé le plus chaud du reflux est relié au deuxième transmetteur de chaleur (5) dans la zone supérieure du réservoir de reflux (8) par l'intermédiaire de la soupape de distribution à trois voies (9) et d'une pompe de circulation (10).

5. Station de raccordement domestique selon la revendication 1, **caractérisée en ce qu'**une sonde de mesure de température (19) est installée immédiatement avant le raccord de l'arrivée de chauffage, une autre sonde de mesure de température (20) se trouvant immédiatement avant le raccord de l'arrivée d'eau chaude, et une autre sonde de mesure de température (21) étant installée entre le deuxième transmetteur de chaleur (5) et l'alimentation du premier réservoir (1) et du réservoir de reflux (8) dans le reflux de chauffage.
